# EUROPÄISCHE PATENTSCHRIFT

(11) **EP 4 551 883 B1**
(45) Veröffentlichungstag und Bekanntmachung des Hinweises auf die Patenterteilung: **03.06.2026**
(21) Anmeldenummer: 23776967.4
(22) Anmeldetag: 26.09.2023
(51) Int. Cl.: F27B 1/00, C04B 2/12, F27B 1/02, F27B 1/26, F27D 19/00

(54) **VERFAHREN ZUR SCHACHTUMSTEUERUNG EINES GLEICHSTROM-GEGENSTROM-REGENERATIV-SCHACHTOFENS**
METHOD FOR THE SHAFT REVERSAL IN A PARALLEL-FLOW REGENERATIVE SHAFT FURNACE
PROCÉDÉ DE COMMANDE DE PUITS D'UN FOUR À CUVE RÉGÉNÉRATRICE COURANT CONTINU-COURANT INVERSE

(30) Priorität: 14.10.2022 DE 102022210898; 14.10.2022 LU 103028
(43) Veröffentlichungstag der Anmeldung: 14.05.2025
(73) Patentinhaber: Maerz Ofenbau AG, 8002 Zürich (CH); thyssenkrupp AG, 45143 Essen (DE)
(72) Erfinder: ASCHWANDEN, Yves, 8046 Zürich (CH); BUCHER, Patrick, 5012 Schönenwerd (CH)
(74) Vertreter: thyssenkrupp Intellectual Property GmbH
(86) Internationale Anmeldenummer: PCT/EP2023/076479
(87) Internationale Veröffentlichungsnummer: WO 2024/078859

(56) Entgegenhaltungen:
- WO-A1-2004/106828
- WO-A1-2022/017796
- DE-A1- 102004 002 043
- RU-C1- 2 724 835

## Beschreibung

Die Erfindung betrifft ein Verfahren zur Schachtumsteuerung eines Gleichstrom-Gegenstrom-Regenerativ-Schachtofens (GGR-Schachtofen) um dabei eine Vermischung zwischen dem Ofenabgas und der Kalkkühlluft zu vermeiden. Damit kann die Kohlendioxidkonzentration im Ofenabgas auf hohem Niveau gehalten werden und so eine vereinfachte Abtrennung erfolgen.

Das Brennen von Karbonatgestein in einem GGR-Schachtofen ist seit etwa 60 Jahren bekannt. Ein derartiger, beispielsweise aus der WO 2011/072894 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Abgasschacht geleitet werden, wo die Abgase im Gegenstrom zum Material nach oben abgeleitet werden und das Material dabei vorwärmen. Das Material wird üblicherweise von oben zusammen mit dem Oxidationsgas in den Schacht aufgegeben, wobei Brennstoffe in der Brennzone eingedüst werden.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Um den Qualitätsanforderungen bezüglich einer hohen Reaktivität des Branntkalkes, wie sie beispielsweise in Stahlwerken gefordert wird, gerecht zu werden, dürfen die Temperaturen in der Brennzone einen Wert von 1100 °C, vorzugsweise 1000 °C, nicht überschreiten. Des Weiteren steigt die Nachfrage nach umweltfreundlicher Herstellung von Branntkalk ebenfalls, sodass bestimmte Anforderungen an den CO₂-Gehalt des Abgases zur anschließenden Nachbehandlung erfüllt werden müssen.

Daher wurden Gleichstrom-Gegenstrom-Regenerativ-Schachtöfen entwickelt, um ein möglichst Kohlendioxid-reiches Abgas zu erzeugen und so den Aufwand bei der Abtrennung zu minimieren. Aus der DE 10 2021 204 176 ist ein solcher Gleichstrom-Gegenstrom-Regenerativ-Schachtofen und ein Verfahren zum Brennen von Karbonatgestein bekannt. Der Gleichstrom-Gegenstrom-Regenerativ-Schachtofen (GGR-Schachtofen) dient zum Brennen und Kühlen von Material, wie Karbonatgesteinen. Der GGR-Schachtofen umfasst mit zwei Schächte, die abwechselnd als Brennschacht und als Regenerativschacht betrieben werden und mittels eines Verbindungskanals miteinander verbunden sind. Jeder Schacht weist in Strömungsrichtung des Materials eine Vorwärmzone zum Vorwärmen des Materials, eine Brennzone zum Brennen des Materials und eine Kühlzone zum Kühlen des Materials auf. Jeder Schacht weist des Weiteren einen Abgasauslass zum Auslassen von Abgas aus dem Schacht auf. Der zumindest ein Abgasauslass ist mit einem Gaseinlass zum Einlassen von Gas in zumindest einen Schacht verbunden. Vorzugsweise weist der GGR-Schachtofen eine Mehrzahl von Gaseinlässen zum Einlassen von aus zumindest einem der Schächte abgezogenem Abgas auf.

Es hat sich beim Betrieb herausgestellt, dass während der Schachtumsteuerung es zu einer Vermischung zwischen dem Ofenabgas und der Kalkkühlluft kommt, wodurch der Kohlendioxidgehalt im Abgas temporär sinkt.

Aus der RU 2 724 835 C1 ist ein Verfahren zum Rösten von Carbonatmaterial in einem Gegenstromofen mit zwei Schächten bekannt.

Aus der DE 10 2004 002 043 A1 ist ein Verfahren zum Brennen von körnigem, mineralischem Brenngut bekannt.

Beispielsweise aus der DE 10 2021 204 176 A1 ist ein Gleichstrom-Gegenstrom-Regenerativ-Schachtofen und ein Verfahren zum Brennen von Karbonatgestein bekannt.

Aufgabe der Erfindung ist es, ein Verfahren zur Schachtumsteuerung bereitzustellen, bei dem eine Vermischung zwischen dem Ofenabgas und der Kalkkühlluft weitestgehend vermieden wird, um damit ein Absinken des Kohlendioxidgehalts im Abgas zu vermeiden und eine Kohlendioxidabtrennung damit in einfacher Wiese zu ermöglichen.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur Schachtumsteuerung eines Gleichstrom-Gegenstrom-Regenerativ-Schachtofens. Bei einem Gleichstrom-Gegenstrom-Regenerativ-Schachtofen (GGR-Schachtofen) wird zunächst ein Schacht als Brennschacht und der zweite Schacht als Regenerativschacht verwendet. Nach einem Zyklus, welcher beispielsweise zwischen 10 min und 60 min, insbesondere zwischen 10 min und 20 min, beispielsweise 15 min, dauern kann, erfolgt eine Schachtumsteuerung und der erste Schacht wird dann als Regenerativschacht und der zweite Schacht als Brennschacht verwendet. Bei herkömmlichen Anlagen wurde hierbei der GGR-Schachtofen üblicherweise drucklos geschaltet, das gebrannte Produkt unten entnommen und das zu brennende Produkt von oben zugeführt. Vorteil des GGR-Schachtofens ist, dass durch diesen wechselseitigen Betrieb eine sehr effiziente Wärmerückgewinnung erfolgt und so der Prozess energetisch sehr günstig abläuft. Von diesem bisherigen Verfahren zur Schachtumsteuerung wird erfindungsgemäß radikal abgegangen. Stattdessen bleibt ein gewisser Gasstrom und damit Druck im GGR-Schachtofen erhalten, was dazu führt, dass das Abgas auch während der Schachtumsteuerung von konstant hoher Kohlendioxid-Konzentration bleibt, sodass eine Abtrennung, insbesondere eine anschließende Verflüssigung, einfach möglich bleibt.

Der Gleichstrom-Gegenstrom-Regenerativ-Schachtofen, welcher für das erfindungsgemäße Verfahren verwendet wird, weist einen ersten Schacht und einen zweiten Schacht auf. Der erste Schacht weist eine erste Vorwärmzone zum Vorwärmen des Materials, eine erste Brennzone zum Brennen des Materials und eine erste Kühlzone zum Kühlen des Materials auf. Der zweite Schacht weist eine zweite Vorwärmzone zum Vorwärmen des Materials, eine zweite Brennzone zum Brennen des Materials und eine zweite Kühlzone zum Kühlen des Materials auf. Die erste Brennzone und die zweite Brennzone sind über einen Verbindungskanal verbunden. Die erste Vorwärmzone weist einen ersten Verbrennungsgaseinlass und die zweite Vorwärmzone einen zweiten Verbrennungsgaseinlass auf. Die erste Vorwärmzone weist einen ersten Abgasauslass und die zweite Vorwärmzone einen zweiten Abgasauslass auf. Die erste Brennzone weist wenigstens eine erste Brennlanze und die zweite Brennzone wenigstens eine zweite Brennlanze auf. Die wenigstens eine erste Brennlanze ist mit einer ersten Brennstoffzuführung und die wenigstens eine zweite Brennlanze ist mit einer zweiten Brennstoffzuführung verbunden.

Das Verfahren weist die folgenden Schritte auf:
a) Betreiben des ersten Schachts als Brennschacht und des zweiten Schachts als Regenerativschacht,
b) Beenden der Brennstoffzufuhr durch die erste Brennstoffzuführung und damit Durchführen des Ausbrennens im ersten Schacht,
c) Schließen des zweiten Abgasauslasses,
   nach dem Beginn des Schrittes c) und vor dem Ende des Schrittes c) Beginnen mit den folgenden Schritten d) bis f)
d) Öffnen des zweiten Verbrennungsgaseinlasses,
e) Schließen des ersten Verbrennungsgaseinlasses,
f) Öffnen des ersten Abgasauslasses,
g) Beginn der Brennstoffzufuhr durch die zweite Brennstoffzuführung und damit Betreiben des zweiten Schachts als Brennschacht und des ersten Schachts als Regenerativschacht.

Wesentlich ist somit, dass zu keinem Zeitpunkt die Zufuhr von Verbrennungsgas und die Abfuhr von Abgas unterbrochen wird. Der GGR-Schachtofen wird damit nicht drucklos, also auf Umgebungsdruck gebracht. Dieses wiederum führt dazu, dass die Vermischung zwischen dem Abgas und dem Kühlgas auch während der Schachtumsteuerung minimiert wird. Insbesondere ist es möglich, das Kühlgas in unveränderter Form durch den GGR-Schachtofen zu fördern, insbesondere muss eben nicht die Kühlgaszufuhr gestoppt oder verändert werden. Dadurch bleibt eine Abtrennung von Kohlendioxid aus dem Abgas sehr einfach, da die Konzentration an Kohlendioxid konstant hoch bleibt.

Der Schritt a) entspricht dem normalen Brennprozess. Auch Schritt b) entspricht dem normalen Vorgehen.

In Schritt c) beginnt zunächst das Schließen des zweiten Abgasauslasses. Das wiederum hat zur Folge, dass eben nicht der GGR-Schachtofen geöffnet, also auf Umgebungsdruck gebracht wird, sondern der Druck gehalten wird. Während des Schließens Beginnen dann zeitlich überlappend das Öffnen des zweiten Verbrennungsgaseinlasses in Schritt d), das Schließen des ersten Verbrennungsgaseinlasses in Schritt e) und das Öffnen des ersten Abgasauslasses in Schritt f). Der Effekt ist, dass der Druck im Verbindungskanal vergleichsweise konstant gehalten werden kann, was wiederum ein guter Indikator dafür ist, dass eine Vermischung mit dem Kühlgas vermeidet.

Während es bisher üblich war, den GGR-Schachtofen beim Umschalten drucklos zu machen und gleichzeitig dabei fertiges Produkt unten zu entnehmen und neues Edukt von oben zuzuführen, der der Ofen ohnehin auf Umgebungsdruck ist, ist bei dem erfindungsgemäßen Verfahren nicht der Fall. Hier kann insbesondere die Entnahme von Produkt und die Zuführung von Edukt beispielsweise auch über Schleusen unabhängig vom Umschaltprozess durchzuführen. Daher muss das erfindungsgemäße Verfahren eben nicht direkt mit der Eduktzuführung und/oder der Produktentnahme verbunden werden, sondern kann davon getrennt erfolgen.

Erfindungsgemäß erfolgen die Schritte d) und e) synchron. Beispielsweise und bevorzugt kann dieses über eine schaltbare Y-Weiche erfolgen. Dabei wird der Gasstrom, der zu den Verbrennungsgaseinlässen strömt, nicht unterbrochen, sondern in genau dem Umfang, dem zu öffnenden Verbrennungsgaseinlass zugeführt, wie der zu schließende Verbrennungsgaseinlass geschlossen wird. Dadurch kann in sehr einfacher Weise die dem GGR-Schachtofen zuströmende Gasmenge über den Schaltvorgang konstant gehalten werden. Da nun aber die Schritte c) und f) eben nicht synchron, sondern zeitlich versetzt laufen, wird also faktisch bei gleichbleibender Gaszufuhr, die Gasabfuhr verringert, sodass der Druck im Inneren des GGR-Schachtofens eher ansteigen wird und so beispielsweise kein Kühlgas aus den Kühlzonen herauskommen kann.

In einer weiteren Ausführungsform der Erfindung beginnen die Schritte d) bis f) gleichzeitig. Dieses ist bevorzugt und sorgt für einen besonders gleichbleibenden Druck im Verbindungskanal.

In einer weiteren Ausführungsform der Erfindung weisen die Schritte c), d) und e) eine erste Zeitdauer t₁ auf. Der Schritt f) weist eine zweite Zeitdauer t₂ aufweist, wobei die zweite Zeitdauer t₂ größer ist als die erste Zeitdauer t₁. Damit erfolgt das Öffnen des ersten Abgasauslasses in Schritt f) langsamer. Dadurch, insbesondere in Verbindung mit dem früheren Beginn des Schließens des zweiten Abgasauslasses in Schritt c) ist sichergestellt, dass der GGR-Schachtofen nicht drucklos wird, sondern die Druckverhältnisse insbesondere in den Brennzonen so stabil bleiben, dass eine Vermischung mit den Kühlgasen besonders zuverlässig vermieden wird.

In einer weiteren Ausführungsform der Erfindung ist die zweite Zeitdauer t₂ 1,5 bis 5 mal so groß ist wie die erste Zeitdauer t₁. Bevorzugt ist die zweite Zeitdauer t₂ 2 bis 3 mal so groß ist wie die erste Zeitdauer t₁.

Erfindungsgemäß beginnt der Schritt f) nach dem Beginn und vor dem Ende der Schritte c), d) und e). Somit ist die Gasabfuhr über den ersten Abgasauslass und den zweiten Abgasauslass zwar dauerhaft geöffnet, wird jedoch im Laufe des Verfahrens die Gasabfuhr zunächst reduziert, wodurch sichergestellt wird, dass der Druck im nneren des GGR-Schachtofens in einfacher Weise eher steigt als fällt und so eine Vermischung mit Kühlluft zuverlässig verhindert wird.

In einer weiteren Ausführungsform der Erfindung weist der Schritt c) eine erste Zeitdauer t₁ auf. Die Schritte d), e) und f) beginnen 1/4 t₁ bis 3/4 t₁, insbesondere 1/3 t₁ bis 2/3 t₁, nach dem Beginn des Schrittes c). Beispielsweise beginnen die Schritte d), e) und f) genau in der Mitte des Schrittes c), also mit einem Zeitversatz von ½ t₁.

In einer weiteren Ausführungsform der Erfindung wird die Zufuhr von Kühlgas und die Abfuhr von Kühlgas in der erste Kühlzone und in der zweiten Kühlzone kontinuierlich mit konstantem Kühlgasstrom fortgesetzt. Hierbei wird insbesondere der Gasstrom über alle Schritte konstant gehalten. Dadurch kann das Strömungs- und Druckprofil in der ersten Kühlzone und in der zweitem Kühlzone konstant gehalten werden.

In einer weiteren Ausführungsform der Erfindung erfolgt das Öffnen und Schließen in den Schritten c), d), e) und f) mit variabler Geschwindigkeit. Insbesondere erfolgt das Öffnen zunächst langsamer und wird dann im Laufe der Schritte beschleunigt.. Insbesondere erfolgt das Schließen zunächst schneller und wird dann im Laufe der Schritte langsamer.

In einer weiteren Ausführungsform der Erfindung wird im oberen Gasbereich des ersten Schachtes ein erster Druck gemessen. Weiter wird im oberen Gasbereich des zweiten Schachtes ein zweiter Druck gemessen. Optional kann zusätzlich der Druck im Verbindungskanal gemessen werden. Die Messung des Druckes ermöglicht eine Regelung in Abhängigkeit von den gemessenen Drücken.

In einer weiteren Ausführungsform der Erfindung wird die Geschwindigkeit des Öffnens und Schließens in den Schritten c), d), e) und f) derart geregelt, dass der erste Druck mit einer konstanten ersten Rate sinkt und/oder der zweite Druck mit einer konstanten zweiten Rate steigt. Wird nur auf einen Druck geregelt, so wird bevorzugt auf den fallenden Druck geregelt. Dieses führt dazu, dass nur ein minimaler Druckabfall im Verbindungskanal feststellbar ist, sodass die Vermischung mit dem Kühlgas weitestgehend vermieden werden kann.

In einer weiteren Ausführungsform der Erfindung ist die erste Rate betragsmäßig gleich der zweiten Rate. Die erste Rate und die zweite Rate weisen ein entgegengesetztes Vorzeichen auf. Betragsmäßig gleich ist hier im technischen Sinne und nicht im exakt mathematischen Sinne zu verstehen. Hierdurch wird ein synchrones Umschalten des Gasflusses im ersten Schacht und im zweiten Schacht des GGR-Schachtofens erreicht.

In einer weiteren Ausführungsform der Erfindung sind der ersten Verbrennungsgaseinlass und der zweite Verbrennungsgaseinlass mit einer Verbrennungsgasleitung verbunden. Die Verbrennungsgasleitung ist mit einer Oxidationsmittelzufuhr verbunden. Insbesondere kann die Oxidationsmittelzufuhr mit einer Luftzerlegung oder einer anderen Quelle für Sauerstoff verbunden sein.

Vorzugsweise wird über die Oxidationsmittelzufuhr Sauerstoff mit einer Reinheit von wenigstens 90 %, bevorzugt wenigstes 95 %, weiter bevorzugt wenigstens 98 %, zugeführt. Nach Abschluss der Schritte c), d), e) und f) und vor Beginn des Schrittes g) wird die Oxidationsmittelzufuhr geöffnet.

**In** einer weiteren Ausführungsform der Erfindung wird während Schritt b) die Oxidationsmittelzufuhr geschlossen. Bevorzugt erfolgt derart, dass das Schließen der Oxidationsmittelzufuhr zum Zeitpunkt des Endes des Schrittes b) abgeschlossen ist.

**In** einer weiteren Ausführungsform der Erfindung wird die Öffnungsgeschwindigkeit in den Schritten d) und f) steigend gewählt.

**In** einer weiteren Ausführungsform der Erfindung erfolgt die Zuführung von Edukt und die Entnahme von Produkt während des Schrittes a). Zuführung und Entnahme erfolgen somit durch eine Schleuse, um weder die Gaszusammensetzung noch den Druck im Inneren des GGR-Schachtofens negativ zu beeinflussen.

**In** einer weiteren Ausführungsform der Erfindung wird die Öffnungsposition des ersten Verbrennungsgaseinlasses, des zweiten Verbrennungsgaseinlasses, des ersten Abgasauslasses und des zweiten Abgasauslasses erfasst. Dadurch kann auch gezielt die Geschwindugkeit des Öffnen und Schließens aktiv geregelt werden.

Weiter kann bei dem GGR-Schachtofen zur Durchführung des Verfahrens der Gaseinlass in der Vorwärmzone des als Brennschacht betriebenen Schachts angeordnet sein. Bei dem Gaseinlass in der Vorwärmzone des Brennschachtes handelt es sich vorzugsweise um einen Verbrennungsgaseinlass, über welchen zusätzlich zu dem Abgas vorzugsweise ein Oxidationsmittel in die Vorwärmzone eingeleitet wird. Der Gaseinlass ist vorzugsweise an dem oberen Ende der Vorwärmzone angeordnet.

Weiter kann bei dem GGR-Schachtofen zur Durchführung des Verfahrens der Gaseinlass in dem Verbindungskanal zur gastechnischen Verbindung der Brennzonen der Schächte angeordnet und/oder in der Brennzone des Schachts, insbesondere des Regenerativschachts, und/oder in einem materialfreien Raum in dem Schacht angeordnet sein. Insbesondere ist der materialfreie Raum als außenliegender Ringraum ausgebildet, der sich umfangsmäßig um vorzugsweise den oberen, an die Brennzone angrenzenden Bereich der Kühlzone erstreckt.

Weiter kann bei dem GGR-Schachtofen zur Durchführung des Verfahrens zwischen dem Abgasauslass und dem Gaseinlass in dem Verbindungskanal zur gastechnischen Verbindung der Brennzonen der Schächte und/oder in der Brennzone ein Wärmetauscher und/oder eine Heizeinrichtung, insbesondere eine elektrische Heizvorrichtung, eine Solareinrichtung oder ein Verbrennungsreaktor, zum Erwärmen des Abgases angeordnet sein. Beispielsweise ist der Wärmetauscher in Strömungsrichtung des Abgases vor der Heizvorrichtung angeordnet. Es ist ebenfalls denkbar, dass lediglich ein Wärmetauscher oder eine Heizvorrichtung zur Erwärmung des Abgases vorhanden sind.

Weiter kann bei dem GGR-Schachtofen zur Durchführung des Verfahrens die Kühlzone einen Kühlgaseinlass zum Einlassen von Kühlgas in die Kühlzone und eine Kühlgasabzugseinrichtung zum Abführen von Kühlgas aus dem Schacht aufweisen.

Weiter kann bei dem GGR-Schachtofen zur Durchführung des Verfahrens einen materialfreien Raum innerhalb der Kühlzone des Schachts aufweisen. Insbesondere ist der materialfreie Raum als außenliegender Ringraum ausgebildet, der sich umfangsmäßig um vorzugsweise den oberen, an die Brennzone angrenzenden Bereich der Kühlzone erstreckt. In dem materialfreien Ringraum ist insbesondere der Kühlgasauslass angeordnet.

Der materialfreie Raum der Kühlgasabzugseinrichtung ist beispielsweise als Innenzylinder ausgebildet, der sich insbesondere mittig und in vertikaler Richtung durch die Kühlzone erstreckt. Insbesondere erstreckt sich der Innenzylinder zumindest teilweise in die Brennzone hinein. In dem Innenzylinder ist der Kühlgasauslass zum Auslassen des Kühlgases aus dem Schacht angeordnet. Der Innenzylinder weist vorzugsweise einen Kühlgaseinlass zum Einlassen von Kühlgas der Kühlzonen in das Innere des Innenzylinders auf, wobei der Kühlgaseinlass vorzugsweise unterhalb des Kühlgasauslasses in dem Innenzylinder angeordnet ist. Insbesondere ist der Kühlgaseinlass am unteren Ende der Kühlzone angeordnet, sodass das Kühlgas vorzugsweise durch die gesamte Kühlgaszone und anschließend in den Innenzylinder der Kühlgasabzugseinrichtung strömt. Innerhalb des Innenzylinders strömt das Kühlgas vorzugsweise nach unten in Richtung des Kühlgasauslasses und in die Kühlgasabzugsleitung. Eine als Innenzylinder ausgebildete Kühlgasabzugseinrichtung ermöglicht eine geringe Bauhöhe der Kühlzone und ein vergleichsweise einfaches Umrüsten von bekannten GGR-Schachtöfen.

Der materialfreie Raum der Kühlgasabzugseinrichtung ist beispielsweise als Verbindungskanal zur gastechnischen Verbindung der Kühlzonen der beiden Schächte ausgebildet, wobei der Kühlgasauslass vorzugsweise in dem Verbindungskanal, insbesondere mittig angeordnet ist.

Die Kühlgasabzugseinrichtung ist vorzugsweise derart ausgebildet, dass sie das gesamte Kühlgas aus dem Schacht auslässt, sodass vorzugsweise kein Kühlgas in die Brennzone oder den Verbindungskanal zur Verbindung der Brennzonen der Schächte gelangt. Insbesondere ist die Kühlgasabzugseinrichtung mit einem Regelorgan, wie einer Klappe oder einem Ventil, zur Einstellung der Menge an abzuziehendem Kühlgas verbunden.

Weiter kann bei dem GGR-Schachtofen zur Durchführung des Verfahrens die Kühlgasabzugseinrichtung mit einem Wärmetauscher zur Erwärmung des Abgases verbunden sein. Die Kühlgasabzugseinrichtung ist insbesondere mittels der Kühlgasabzugsleitung mit dem Wärmetauscher verbunden. Der Wärmetauscher dient vorzugsweise der Erwärmung des Abgases, das über den Abgasauslass aus der Vorwärmzone des Regenerativschachts ausgelassen wurde. Der Wärmetauscher ist insbesondere mit dem Abgasauslass und dem Kühlgasauslass der Kühlgasabzugseinrichtung verbunden.

Weiter kann bei dem GGR-Schachtofen zur Durchführung des Verfahrens jeder Schacht einen Verbrennungsgaseinlass zum Einlassen von Verbrennungsgas in die Vorwärmzone und/oder die Brennzone aufweisen, wobei der Verbrennungsgaseinlass mit einer Oxidationsmittelleitung zur Leitung eines Oxidationsmittels in den Schacht verbunden ist. Der Verbrennungsgaseinlass ist vorzugsweise mit dem Abgasauslass zur Leitung des Abgases in den Schacht verbunden.

Beispielsweise kann das Verfahren mit ein Steuersystem für einen Gleichstrom-Gegenstrom-Regenerativ-Schachtofen realisiert werden, welches ausgebildet ist, das erfindungsgemäße Verfahren auszuführen. Bevorzugt weist das Steuersystem dazu ausführbare Programminstruktionen auf, um das erfindungsgemäße Verfahren auszuführen. Das Steuersystem ist somit nicht nur geeignet, sondern auch befähigt, das erfindungsgemäße Verfahren auszuführen.

Nachfolgend ist das erfindungsgemäße Verfahren anhand eines in den Zeichnungen dargestellten Ausführungsbeispiels näher erläutert.
Fig. 1 erster beispielhafter GGR-Schaftofen zur Durchführung des Verfahrens
Fig. 2 zweiter beispielhafter GGR-Schaftofen zur Durchführung des Verfahrens
Fig. 3 gesamter Zyklus
Fig. 4 Schachtumsteuerung
Fig. 5 Druckverlauf während der Schachtumsteuerung

In den Figuren und den Bezugszeichen wird zwischen dem ersten Schacht und dem zweiten Schacht nicht unterschieden. Mit jedem Zyklus werden die Funktionen zwischen den beiden Schächten getauscht, sodass ein gemeinsames Bezugszeichen für den ersten Schacht und den zweiten Schacht sowie die entsprechenden Komponenten sinnvoll ist.

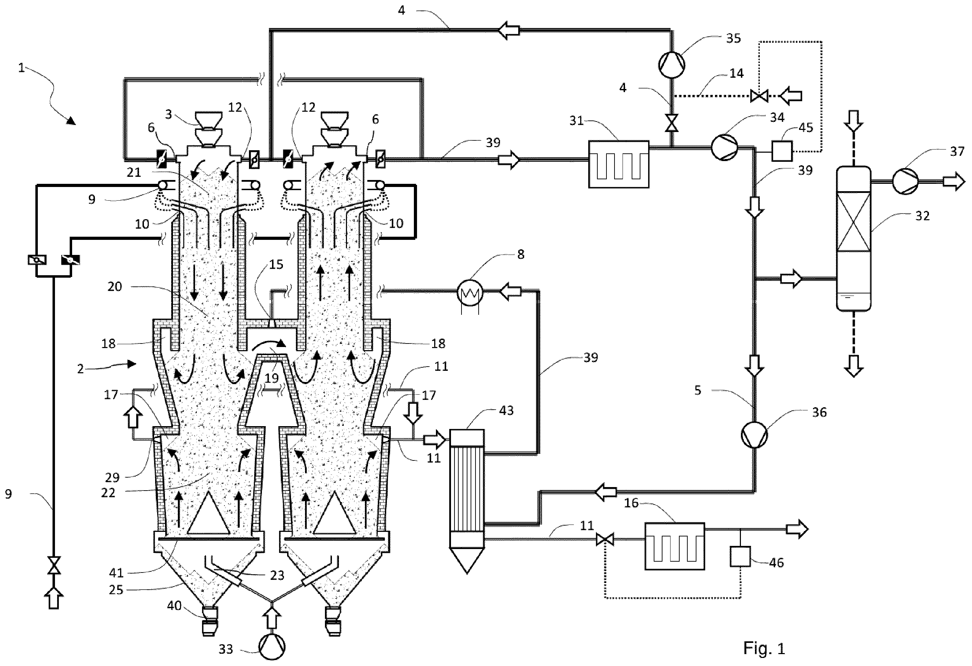

Fig. 1 zeigt einen GGR-Schachtofen 1 mit zwei parallelen und vertikal ausgerichteten Schächten 2. Die Schächte 2 des GGR-Schachtofens 1 sind im Wesentlichen identisch aufgebaut, sodass in Fig. 1 leidglich einer der beiden Schächte 2 mit Bezugszeichen versehen ist und im Folgenden der Einfachheit halber lediglich einer der beiden Schächte 2 beschrieben ist. Jeder Schacht 2 weist jeweils einen Materialeinlass 3 auf zum Einlassen von zu brennenden Material in den jeweiligen Schacht 2 des GGR-Schachtofens 1. Bei dem zu brennenden Material handelt es sich insbesondere um Kalkstein und/oder Dolomitstein vorzugsweise mit einer Korngröße von 10 bis 200 mm, vorzugsweise von 15 bis 120 mm, höchstvorzugsweise 30 bis 100 mm. Die Materialeinlässe 3 sind beispielhaft an dem oberen Ende des jeweiligen Schachts 2 angeordnet, sodass das Material durch den Materialeinlass 3 schwerkraftbedingt in den Schacht 2 fällt. Der Materialeinlass 3 ist beispielsweise als obere Öffnung des Schachts 2 und insbesondere als Schleuse 3 ausgebildet und erstreckt sich vorzugsweise über den gesamten oder einen Teil des Querschnitts des Schachts 2. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Jeder Schacht 2 weist an seinem oberen Ende des Weiteren einen Verbrennungsgaseinlass 12 zum Einlassen von Verbrennungsgas zur Verbrennung von Brennstoffen auf. Bei dem Verbrennungsgas handelt es sich beispielsweise um entstaubtes Abgas zumindest eines der Schächte 2, wobei das Abgas vorzugsweise mit Sauerstoff angereichert ist. Des Weiteren weist jeder Schacht 2 einen Abgasauslass 6 zum Auslassen von Abgasen aus dem jeweiligen Schacht 2 auf. Jedem Abgasauslass 6 und Verbrennungsgaseinlass 12 ist beispielhaft jeweils ein Regelorgan zugeordnet. Über die Regelorgane, wie beispielsweise einem mengenregulierbarem Verdichter 35, ist vorzugsweise die Menge an Verbrennungsgas in den jeweiligen Verbrennungsgaseinlass 12 und die Menge an über den jeweiligen Abgasauslass 6 abzuziehendes Abgas einstellbar. Der Verbrennungsgaseinlass 12 und der Abgasauslass sind beispielhaft auf dem gleichen Höhenniveau und insbesondere innerhalb der Vorwärmzone 21 des jeweiligen Schachts 2 angeordnet.

Am unteren Ende des Schachts 2 ist ein Materialauslass 40 zum Abführen des gebrannten Materials angeordnet. Bei dem Materialauslass 40 handelt es sich beispielsweise um eine wie mit Bezug auf den Materialeinlass 3 beschriebene Schleuse. Das gebrannte Material wird beispielsweise in einen Auslasstrichter 25 geleitet, an den sich der Materialauslass 40 des Schachts 2 anschließt. Der Auslasstrichter 25 ist beispielhaft trichterförmig ausgebildet. Der Auslasstrichter 25 weist vorzugsweise einen Kühlgaseinlass 23 zum Einlassen von Kühlgas in den jeweilige Schacht 2 auf. Das Kühlgas wird vorzugsweise mittels eines Verdichters 33 in den Kühlgaseinlass geleitet.

Im Betrieb des GGR-Schachtofens 1 strömt das zu brennende Material von oben nach unten durch den jeweiligen Schacht 2, wobei die Kühlluft von unten nach oben, im Gegenstrom zu dem Material, durch den jeweiligen Schacht 2 strömt. Das Ofenabgas wird durch den Abgasauslass 6 aus dem Schacht 2 abgeführt.

Unterhalb des Materialeinlasses 3 und des Verbrennungsgaseinlasses 12 schließt sich in Strömungsrichtung des Materials die Vorwärmzone 21 des jeweilige Schachtes 2 an. In der Vorwärmzone 21 wird das Material und das Verbrennungsgas vorzugsweise auf etwa 700 °C vorgewärmt. Vorzugsweise ist der jeweilige Schacht 2 mit zu brennendem Material gefüllt. Das Material wird vorzugsweise oberhalb der Vorwärmzone 21 in den jeweiligen Schacht 2 aufgegeben. Zumindest ein Teil der Vorwärmzone 21 und der sich in Strömungsrichtung des Materials daran anschließende Teil des jeweiligen Schachtes 2 sind beispielsweise mit einer feuerfesten Auskleidung umgeben.

In der Vorwärmzone 21 sind optional eine Mehrzahl von Brennerlanzen 10 angeordnet und dienen jeweils als Einlass für Brennstoff, wie beispielsweise ein Brenngas, Öl oder gemahlener fester Brennstoff. Der GGR-Schachtofen 1 weist beispielsweise eine Kühleinrichtung zur Kühlung der Brennerlanzen 10 auf. Die Kühleinrichtung umfasst beispielsweise eine Mehrzahl von Kühlluftringleitungen, die sich ringförmig um den Schachtbereich erstrecken, in dem die Brennerlanzen 10 angeordnet sind. Durch die Kühlluftringleitungen strömt vorzugsweise Kühlluft zur Kühlung der Brennerlanzen 10. Vorzugsweise werden die Brennerlanzen 10 mittels des über den Abgasauslass 6 abgeführten Abgases gekühlt. Vorzugsweise ist der Abgasauslass 6 mit den Brennerlanzen 10 zur Leitung von Abgas zu den Brennerlanzen 10 verbunden.

Vorzugsweise sind in jedem Schacht 2 eine Mehrzahl, beispielsweise zwölf oder mehr Brennerlanzen 10 und im Wesentlichen gleichmäßig zueinander beabstandet angeordnet. Die Brennerlanzen 10 weisen beispielsweise eine L-Form auf und erstrecken sich vorzugsweise in horizontaler Richtung in den jeweiligen Schacht 2 hinein und innerhalb des Schachtes 2 in vertikaler Richtung, insbesondere in Strömungsrichtung des Materials. Die Enden der Brennerlanzen 10 eines Schachtes 2 sind vorzugsweise alle auf demselben Höhenniveau angeordnet. Vorzugsweise ist die Ebene, an der die Lanzenenden angeordnet sind, jeweils das untere Ende der jeweiligen Vorwärmzone 21. Die Brennerlanzen 10 sind vorzugsweise mit einer Brennstoffleitung 9 zur Leitung von Brennstoff zu den Brennerlanzen 10 verbunden. Die Brennstoffleitung 9 ist beispielshaft zumindest teilweise als Ringleitung ausgebildet, die sich umfangsmäßig um den jeweiligen Schacht 2 herum erstreckt. Vorzugsweise weist jeder Schacht 2 eine jeweils den Brennerlanzen 10 des Schachts 2 zugeordnete Brennstoffleitung auf, die insbesondere jeweils ein Regelorgan zur Einstellung der Brennstoffmenge zu den Brennerlanzen 10 aufweist.

An die Vorwärmzone 21 schließt sich in Strömungsrichtung des Materials die Brennzone 20 an. **In** der Brennzone 20 wird der Brennstoff verbrannt und das vorgewärmte Material bei einer Temperatur von etwa 1000 °C gebrannt. Der GGR-Schachtofen 1 weist des Weiteren einen Verbindungskanal 19 zum gastechnischen Verbinden der beiden Schächte 2 miteinander auf. **In** dem Verbindungskanal 19 ist insbesondere kein zu brennendes Material vorhanden.

Die Fig. 1 zeigt beispielhaft einen GGR-Kalkofen 1 mit runden Schachtquerschnitten. Der Schachtquerschnitt kann jedoch eine andere geometrische Kontur aufweisen, wie beispielsweise rund, halbrund, oval, viereckig oder vieleckig. Die Brennzone 20 erstreckt sich beispielhaft in einem ersten und einem zweiten Schachtabschnitt, wobei der erste Schachtabschnitt einen im Wesentlichen konstanten oder nach unten geringfügig grösser werdenden Querschnitt aufweist. An den ersten Schachtabschnitt schließt sich in Strömungsrichtung des Materials ein zweiter Schachtabschnitt an, der einen sich in Strömungsrichtung des Materials verringernden Schachtquerschnitt aufweist. Der erste Schachtabschnitt erstreckt sich mit seinem unteren Bereich in den oberen Bereich des zweiten Schachtabschnitts hinein, sodass sich ein Ringkanal 18 zwischen den beiden Schachtabschnitten ausbildet. Der Ringkanal 18 bildet einen materialfreien Raum aus, in dem kein zu brennendes Material angeordnet ist. Der zweite Schachtabschnitt weist in seinem oberen Bereich einen größeren Querschnitt als der erste Schachtabschnitt auf, wobei sich der Querschnitt des zweiten Schachtabschnitts in Strömungsrichtung des Materials auf den Querschnitt des ersten Schachtabschnitts reduziert und vorzugsweise das untere Ende der Brennzone 20 ausbildet. Der Ringkanal 18 erstreckt sich vorzugsweise umfangsmäßig um den unteren Bereich des ersten Schachtabschnitts der Brennzone 20. Die Schächte 2 der Fig. 1 weisen beispielsweise jeweils einen Ringkanal 18 auf, die mit dem Verbindungskanal 19 verbunden sind.

An die Brennzone 20 schließt sich in Strömungsrichtung des Materials in jedem Schacht 2 eine Kühlzone 22 an, die sich bis zum Materialauslass 40 erstreckt. Die Kühlzone ist in einem Schachtabschnitt mit einem im Wesentlichen konstanten oder nach unten kleiner werdendem Querschnitt ausgebildet. Der Querschnitt des Schachtabschnitts der Kühlzone 22 ist größer als der Querschnitt des unteren Bereichs der Brennzone 20, sodass sich an dem oberen Ende der Kühlzone 22 und angrenzend an die Brennzone 20 ein weiterer materialfreier Raum 17, insbesondere ein ringförmiger Absatz ausbildet, in dem kein Material angeordnet ist. Das Material wird innerhalb der Kühlzone 22 auf etwa 100 °C im Gegenstrom zu dem Material strömendem Kühlgas abgekühlt. Am unteren Ende der Kühlzone 22 ist eine vorzugsweise kegelförmige Strömungseinrichtung angeordnet, die zur Leitung des Materials in Richtung der Schachtwand dient.

Jede Kühlzone 22 weist jeweils eine Kühlluftauslassvorrichtung 17 mit jeweils einem Kühlgasauslass 29 auf. In dem Ausführungsbeispiel der Fig. 1 ist die Kühlluftauslassvorrichtung 17 als materialfreier, insbesondere ringförmiger Raum 17 ausgebildet. Der Kühlgasauslass 29 ist vorzugsweise in der Schachtwand des materialfreien Raums 17 am oberen Ende der Kühlzone 22 angeordnet. Das über den Kühlgaseinlass 23 in die Kühlzone 22 strömende Kühlgas strömt vorzugsweise vollständig aus dem Kühlgasauslass 29 der Kühlluftauslassvorrichtung 17 aus dem jeweiligen Schacht 2 heraus.

An dem materialauslassseitigen Ende eines jeden Schachtes 2 ist vorzugsweise eine Austragseinrichtung 41 angeordnet. Die Austragseinrichtungen 41 umfassen beispielsweise horizontale Platten, vorzugsweise einen Austragstisch, die einen seitlichen Durchtritt des Materials zwischen dem Austragstisch und der Gehäusewand des GGR-Schachtofens erlauben. Die Austragseinrichtung 41 ist vorzugsweise als Schub- oder Drehtisch oder als Tisch mit Schubräumer ausgeführt. Dies ermöglicht eine gleichmäßige Durchsatzgeschwindigkeit des Brennguts durch die Schächte 2. Die Austragseinrichtung 41 umfasst des Weiteren beispielhaft den Auslasstrichter 25, der sich an den Austragstisch anschließt und an dessen unterem Ende der Materialauslass 40 angebracht ist.

Im Betrieb des GGR-Schachtofens 1 ist jeweils einer der Schächte 2 aktiv, wobei der jeweils andere Schacht 2 passiv ist. Der aktive Schacht 2 wird als Brennschacht und der passive Schacht 2 als Regenerativschacht bezeichnet. Der GGR-Schachtofen 1 wird insbesondere zyklisch betrieben, wobei eine übliche Zykluszahl beispielsweise 75 bis 150 Zyklen pro Tag beträgt. Nach Ablauf der Zykluszeit wird die Funktion der Schächte 2 getauscht. Dieser Vorgang wiederholt sich fortlaufend. Über die Materialeinlässe 3 wird abwechselnd Material wie Kalk- oder Dolomitstein in die Schächte 2 aufgegeben. In dem als Brennschacht betriebenen, aktiven Schacht 2 wird über die Brennerlanzen 10 ein Brennstoff in den Brennschacht 2 eingeleitet. Das zu brennende Material wird in der Vorwärmzone 21 des Brennschachts auf eine Temperatur von etwa 700 °C erwärmt. In dem Ausführungsbeispiel der Fig. 1 wird der linke Schacht 2 als Brennschacht betrieben, wobei der rechte Schacht 2 als Regenerativschacht betrieben wird.

Im Betrieb des GGR-Schachtofens 1 strömt sowohl in dem Brennschacht 2 als auch in dem Regenerativschacht 2 das Kühlgas im Gegenstrom zu dem zu kühlenden Material durch die Kühlzone 22 und wird vorzugsweise vollständig über den Kühlgasauslass 29 aus dem Schacht 2 ausgelassen, sodass vorzugsweise kein Kühlgas von der Kühlzone 22 in die Brennzone 20 strömt.

Innerhalb des als Brennschacht betriebenen Schachts 2 strömt das Verbrennungsgas durch den Verbrennungsgaseinlass 12 in den Brennschacht und im Gleichstrom mit dem Material innerhalb der Brennzone 20 in den als Ringkanal 18 ausgebildeten materialfreien Raum. Von dem materialfreien Raum 18 strömt das Gas über den Verbindungskanal 19 in den als Regenerativschacht betriebenen Schacht 2. Innerhalb des Regenerativschachts strömt das Gas von dem Verbindungskanal 19 und dem materialfreien Raum 18 des Regenerativschachts im Gegenstrom zu dem zu brennenden Material durch die Brennzone 20 in die Vorwärmzone 21 und verlässt den Regenerativschacht durch den Abgasauslass 6 des Regenerativschachts. Vorzugsweise weist das aus dem Schacht 2 ausgelassene Abgas eine Temperatur von 60 °C bis 160 °C, vorzugsweise 100 °C, auf.

Das Abgas wird in eine sich an den Abgasauslass 6 anschließende Abgasleitung 39 geleitet. Die Abgasleitung 39 weist in Strömungsrichtung des Abgases im Anschluss an den Abgasauslass 6 optional einen Abgasfilter 31 zum Filtern von feinen Partikeln, insbesondere Staub, aus dem Abgas auf. Stromabwärts des Abgasfilters 31 weist die Abgasleitung 39 eine Abzweigung auf, wobei ein Teil des Abgases in einer Verbrennungsgasleitung 4 zu dem Verbrennungsgaseinlass 12 geleitet wird. Stromabwärts der Abzweigung weist die Verbrennungsgasleitung 4 in Strömungsrichtung des Abgases beispielhaft ein Regelorgan, wie beispielsweise eine Drosselklappe, und einen Verdichter 35 auf. Die Verbrennungsgasleitung 4 ist vorzugsweise mit den Verbrennungsgaseinlässen 12 der Schachte 2 verbunden, wobei über ein dem Verbrennungsgaseinlass 12 vorgeschaltetes Regelorgan vorzugsweise lediglich dem Verbrennungsgaseinlass 12 des als Brennschacht betriebenen Schachts 2 das Abgas zugeführt wird. Die Verbrennungsgasleitung 4 ist vorzugsweise mit einer Oxidationsmittelleitung 14 verbunden, sodass ein Oxidationsmittel, vorzugsweise reiner Sauerstoff, in die Verbrennungsgasleitung 4 und anschließend zusammen mit dem Abgas über den Verbrennungsgaseinlass 12 in den Schacht 2 eingeführt wird. Es ist ebenfalls denkbar, dass als Oxidationsmittel ein sauerstoffreiches Gas mit einem Sauerstoffanteil von mindestens 70 bis 95 %, vorzugsweise 90 % in die Verbrennungsgasleitung 4 eingeführt wird.

Der Teil des Abgases, der nicht zu dem Verbrennungsgaseinlass 12 zurückgeführt wird, wird in der Abgasleitung 39 einem Gaseinlass 15 in dem Verbindungskanal 19 zugeführt. Die Abgasleitung 39 weist stromabwärts der Abzweigung der Verbrennungsgasleitung 4 in Strömungsrichtung des Abgases vorzugsweise einen mengenregulierbaren Verdichter 36, einen Wärmetauscher 43 und optional eine Heizeinrichtung 8 zur Erwärmung des Abgases auf. Der Wärmetauscher 43 ist beispielhaft als Rekuperator ausgebildet, wobei das Abgas im Gegenstrom zu dem abgezogenen Kühlgas erwärmt wird und sich das Kühlgas gleichzeitig abkühlt. Der Wärmetauscher 43 ist insbesondere über eine Kühlgasabzugsleitung 11 mit den Kühlgasauslässen 29 beider Schachte 2 verbunden, sodass das Abgas in dem Wärmetauscher 43 mittels des abgezogenen Kühlgases vorzugsweise im Gegenstrom erwärmt wird. Im Anschluss an den Wärmetauscher weist die Kühlgasabzugsleitung 11 optional ein Regelorgan zum Einstellen der abzuziehenden Kühlgasmenge und einen Filter 16 zum Entstauben des Kühlgases auf. Das Abgas wird in dem Wärmetauscher 43 und/oder der Heizeinrichtung 8 vorzugsweise auf eine Temperatur von etwa 900 °C bis 1100 °C, insbesondere 1000 °C erhitzt. Es ist ebenfalls denkbar, dass die Abgasleitung 39 lediglich einen Wärmetauscher 43 oder eine Heizeinrichtung 8 zur Erwärmung des Abgases aufweist. Beispielsweise wird das Abgas in dem Wärmetauscher 43 auf eine Temperatur von etwa 600 °C und anschließend in der Heizeinrichtung 8 auf eine Temperatur von etwa 1000 °C erhitzt.

Bei der Heizeinrichtung 8 handelt es sich beispielsweise um eine elektrisch betriebene Heizeinrichtung. Insbesondere wird die Heizeinrichtung mittels Solarenergie betriebenen. Es ist ebenfalls denkbar, dass die Heizeinrichtung 8 einen Wärmetauscher umfasst, wobei das im Gegenstrom strömende Wärmemittel über Solarenergie erhitzt wird. Die Heizeinrichtung 8 ist vorzugsweise als Verbrennungsreaktor zur Verbrennung von vorzugsweise erneuerbaren Energieträgern, wie Holz, ausgebildet, wobei die Verbrennung vorzugsweise derart erfolgt, dass das Verbrennungsgas einen hohen CO₂-Anteil von mindestens 90 % aufweist.

Stromaufwärts des Wärmetauschers 43 wird ein Teil des Abgases abgezweigt und über einen Kühleinrichtung 32 mittels eines Verdichters 37 abgeführt. Vorzugsweise wird gesamte CO₂-Menge aus der Kalzinierung und der Verbrennung sowie das Wasser aus der Verbrennung aus dem GGR-Schachtofen 1 abgeführt. Die Kühleinrichtung 32 ist beispielsweise ein Wärmetauscher, der vorzugsweise mit einem Kühlmittel, wie Wasser, im Gegenstrom bestrieben wird. Die Abgasleitung weist beispielhaft vor und nach der Abzweigung des abzuführenden Abgases jeweils einen Verdichter 34, 36 auf.

Der Verbindungskanal 19 weist einen Gaseinlass 15 zum Einlassen von rezirkuliertem Abgas in den Verbindungskanal 19 auf. Der Gaseinlass 15 ist über die Abgasleitung 39 mit dem Abgasauslass 6 des Schachts 2 verbunden, sodass aus dem Schacht 2 abgeführtes, entstaubtes und erwärmtes Abgas in den Verbindungskanal 19 geleitet wird. Der Gaseinlass 15 ist beispielhaft mittig in der oberen Wand des Gaskanal 15 angeordnet. Es ist ebenfalls denkbar, dass der Gaseinlass 15 an einer davon abweichenden Position in der Wand des Verbindungskanals 19 oder in den Ringkanälen 18 angeordnet ist. Es ist ebenfalls denkbar, dass eine Mehrzahl von Gaseinlässen 15 in dem Verbindungskanal 19 oder in den Ringkanälen 18 angebracht sind, die jeweils mit der Abgasleitung 39 verbunden sind.

Fig. 1 zeigt des Weiteren beispielhaft zwei Gasanalyseeinrichtungen 45, 46. Die Gasanalyseeinrichtungen 45, 46 sind derart ausgebildet, dass sie jeweils den Sauerstoffund/oder den CO₂-Gehalt des jeweiligen Gases ermitteln. Eine Gasanalyseeinrichtung 45 ist beispielhaft in der Abgasleitung 39 stromabwärts der Abzweigung der Verbrennungsgasleitung 4 angeordnet und zur Ermittlung des Sauerstoff- und/oder den CO₂-Gehalt des Abgases ausgebildet. Die Gasanalyseeinrichtung 45 ist insbesondere mit einer nicht dargestellten Regelungseinrichtung zur Übermittlung des ermittelten Sauerstoff- und/oder den CO₂-Gehalts des Abgases verbunden.

Die Oxidationsmittelleitung 14 weist vorzugsweise ein Regelorgan auf, wie beispielsweise ein Ventil oder eine Klappe auf, über welches die Menge an Oxidationsmittel in die Verbrennungsgasleitung 4 einstellbar ist. Das Regelorgan ist vorzugsweise mit der Regeleinrichtung verbunden, wobei die Regeleinrichtung insbesondere derart ausgebildet ist, dass sie die Menge an Oxidationsmittel in die Verbrennungsgasleitung 4 in Abhängigkeit des mittels der Gasanalyseeinrichtung 45 ermittelten Sauerstoff- und/oder den CO₂-Gehalts des Abgases regelt.

Die Regelung dient insbesondere einer vollständigen Verbrennung des Brennstoffes, der über die Brennstoffleitung 9 dem GGR-Schachtofen 1 zugeführt wird. Ein unerwünscht hoher Sauerstoffanteil in der Abgasleitung 39 wird damit verhindert. Zur Kontrolle des gewünschten CO₂-Gehalts in der Abgasleitung 39, wird der CO₂-Gehalt ebenfalls gemessen.

Die Regelungseinrichtung ist vorzugsweise derart ausgebildet, dass die den mittels der Gasanalyseeinrichtung 45 ermittelten Sauerstoff- und/oder den CO₂-Gehalt mit einem jeweiligen vorabbestimmten Grenzwert oder Grenzbereich vergleicht und bei einer Abweichung des ermittelten Wertes von dem Grenzwert oder Grenzbereich, die Menge an Oxidationsmittel in die Verbrennungsgasleitung erhöht oder verringert.

Vorzugsweise wird die Menge an Oxidationsmittel erhöht, wenn der Grenzwert oder Grenzbereich des ermittelten Sauerstoffgehalts unterschritten wird. Vorzugsweise wird die Menge an Oxidationsmittel verringert, wenn der Grenzwert oder Grenzbereich des ermittelten Sauerstoffgehalts überschritten wird.

Eine Gasanalyseeinrichtung 46 ist beispielhaft in der Kühlgasabzugsleitung 11, insbesondere stromabwärts des Wärmetauschers 43 und beispielsweise des Filters 16 angeordnet und zur Ermittlung des Sauerstoff- und/oder den CO₂-Gehalt des abgeführten Kühlgases ausgebildet. Die Gasanalyseeinrichtung 46 ist insbesondere mit der nicht dargestellten Regelungseinrichtung zur Übermittlung des ermittelten Sauerstoffund/oder den CO₂-Gehalts des Kühlgases verbunden.

Die Kühlgasabzugsleitung 11 weist vorzugsweise ein Regelorgan auf, wie beispielsweise ein Ventil oder eine Klappe auf, über welches die Menge an über die Kühlgasabzugseinrichtung 17 abzuführendem Kühlgas einstellbar ist. Das Regelorgan ist vorzugsweise mit der Regeleinrichtung verbunden, wobei die Regeleinrichtung insbesondere derart ausgebildet ist, dass sie die Menge an über die Kühlgasabzugseinrichtung 17 abgeführtem Kühlgas in Abhängigkeit des mittels der Gasanalyseeinrichtung 46 ermittelten Sauerstoff- und/oder den CO₂-Gehalts des Kühlgases regelt.

Die Regelung dient insbesondere einem möglichst vollständigen Abzug des Kühlgases aus dem GGR-Schachtofen 1 bei einem gleichzeitig möglichst geringen oder vorzugsweise keinem CO₂ in der Kühlgasabzugsleitung 11.

Die Regelungseinrichtung ist vorzugsweise derart ausgebildet, dass die den mittels der Gasanalyseeinrichtung 46 ermittelten Sauerstoff- und/oder den CO₂-Gehalt mit einem jeweiligen vorabbestimmten Grenzwert oder Grenzbereich vergleicht und bei einer Abweichung des ermittelten Wertes von dem Grenzwert oder Grenzbereich, die Menge über die Kühlgasabzugseinrichtung 17 abzuführendem Kühlgas erhöht oder verringert.

Vorzugsweise wird die Menge an Kühlgas erhöht, wenn der Grenzwert oder Grenzbereich des ermittelten CO₂-Gehalts unterschritten wird. Vorzugsweise wird die Menge an Kühlgas verringert, wenn der Grenzwert oder Grenzbereich des ermittelten CO₂-Gehalt überschritten wird.

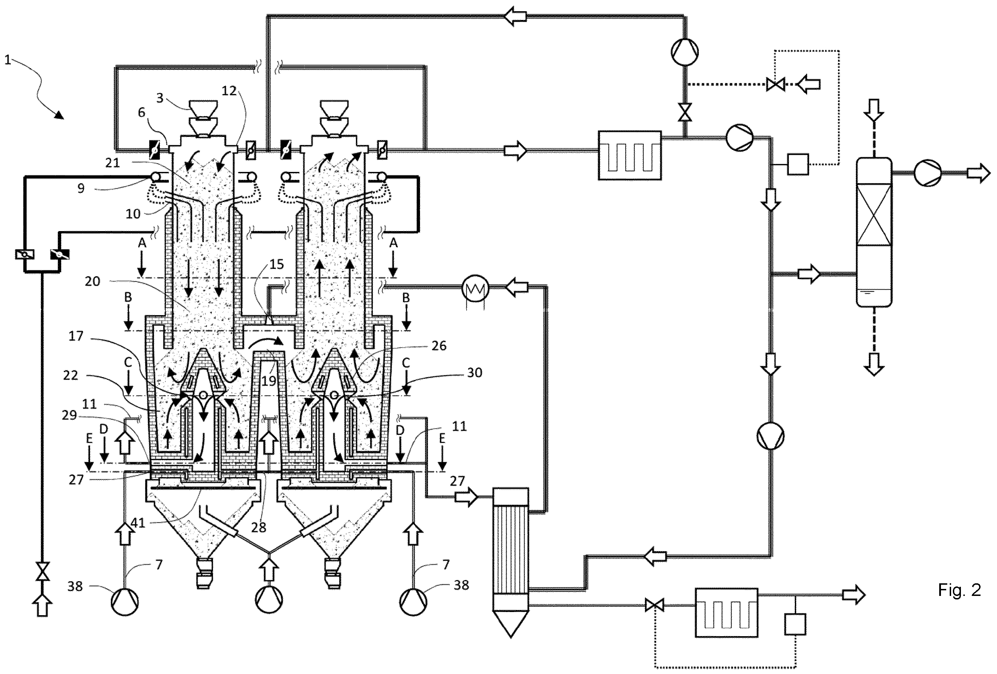

Fig. 2 zeigt ein weiteres Ausführungsbeispiel eines GGR-Schachtofens, wobei dieser größtenteils dem GGR-Schachtofen der Fig. 1 entspricht. Gleiche Elemente sind mit gleichen Bezugszeichen versehen. In dem GGR-Schachtofen 1 der Fig. 2 wird beispielhaft der linke Schacht 2 als Brennschacht betrieben. Im Unterschied zu dem GGR-Schachtofen der Fig. 1 weist der GGR-Schachtofen 1 der Fig. 2 eine Kühlgasabzugseinrichtung 17 auf, die einen Innenzylinder 26 umfasst, der sich von der Kühlzone 22 zumindest teilweise in die Brennzone 20 erstreckt und einen Kühlgasauslass 29 aufweist, der mit der Kühlgasabzugsleitung 11 verbunden ist.

Die Kühlzone 22 ist beispielhaft in einem Schachtabschnitt ausgebildet, der einen in etwa konstanten Querschnitt aufweist, wobei der Schachtquerschnitt der Kühlzone 22 dem Schachtquerschnitt dem unteren Bereich der Brennzone 20 entspricht. Der materialfreie Ringraum des GGR-Schachtofens der Fig. 1, ist daher in dem Ausführungsbeispiel der Fig. 2 nicht ausgebildet. Jeder Schacht 2 des GGR-Schachtofens 1 der Fig. 2 weist einen Innenzylinder 29 auf, der sich mittig in vertikaler Richtung durch die Kühlzone 22 erstreckt. Beispielhaft erstreckt sich der Innenzylinder 29 von der Austragseinrichtung 41 durch die Kühlzone 22 in die Brennzone 20 bis auf die Höhe des Verbindungskanals 19. Zur Kühlung des Innenzylinders 29 sind in dessen Außenwände eine Mehrzahl von Kühlluftkanälen ausgebildet, die mit einer Kühlluftleitung 7 zur Leitung von Kühlluft verbunden sind. Die Kühlluft wird vorzugsweise mittels eines Verdichters 38 über die Kühlluftleitung 7 in die Kühlluftkanäle des Innenzylinders 26 geleitet. Die erwärmte Kühlluft wird beispielhaft in die Kühlgasabzugsleitung 11 geleitet und vorzugsweise zur Erwärmung des Abgases in den Wärmetauscher 43 geführt. Die Innenzylinder 26 weisen jeweils einen sich radial nach außen erstreckenden Kühllufteinlass 27 und einen Kühlluftauslass 28, die mit der Kühlluftleitung 7 verbunden sind.

Der Innenzylinder 26 der Kühlgasabzugseinrichtung 17 weist einen Kühlgasauslass 29 auf, der sich von dem Innenzylinder 26 radial nach außen durch die Schachtwand erstreckt und der Leitung von Kühlgas aus dem Innenzylinder in die Kühlgasabzugsleitung 11 dient. Der Innenzylinder 26 weist des Weiteren einen Kühlgaseinlass 30 zum Einlassen von Kühlgas aus der Kühlzone 22 in den Innenzylinder 26 auf. Der Kühlgaseinlass 30 erstreckt sich durch die Innenzylinderwand in die Kühlzone 22 und verbindet das Innere des Innenzylinders 26 mit der Kühlzone 22. Beispielhaft weist jeder Innenzylinder 26 vier Kühlgaseinlässe 30 auf, die jeweils auf gleicher Höhe in der Innenzylinderwand ausgebildet sind und sich vorzugsweise gleichmäßig zueinander beabstandet sternförmig nach außen in die Kühlzone 22 erstrecken. Der Kühlgaseinlass 30 ist vorzugsweise oberhalb des Kühlgasauslasses 29 in der Kühlzone 22 angeordnet. Das Kühlgas strömt im Betrieb des GGR-Schachtofens 1 von unten nach oben durch die Kühlzone 22 und in den Kühlgaseinlass 30 in den Innenzylinder 26 der Kühlgasabzugseinrichtung 17. Vorzugsweise strömt das gesamte in die Kühlzone 22 eingeleitete Kühlgas durch die Kühlgaseinlässe 30 in die Kühlgasabzugseinrichtung 17, sodass kein Kühlgas in die Brennzone 20 gelangt. Der Kühlluftauslass 29 des Innenzylinders 26 ist vorzugsweise im unteren Bereich der Kühlzone 22 angeordnet. Das Kühlgas strömt insbesondere von dem Kühlgaseinlass 30 in dem Innenzylinder 26 nach unten zu dem Kühlgasauslass 29.

Die Leitung des aus der Kühlzone 22 abgezogenen Kühlgases und des aus der Vorwärmzone 21 abgezogenen Abgases entsprechen in dem Ausführungsbeispiel der Fig. 2 der mit Bezug auf Fig. 1 beschriebenen Verschaltung.

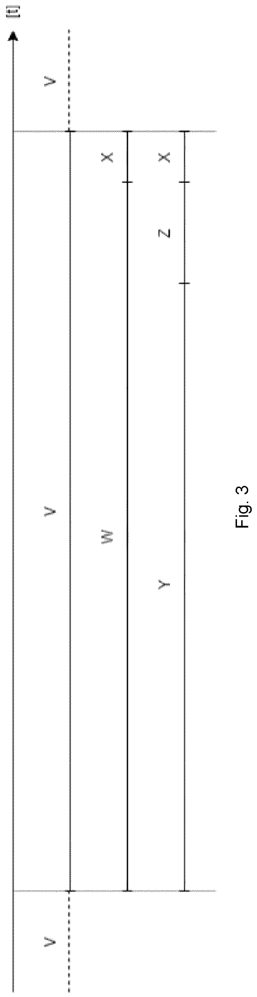

In Fig. 3 ist der Zeitstrahl eines Zyklus V gezeigt. Gestrichelt vor dem Zyklus V und hinter dem Zyklus V liegen weiteren Zyklen V. Ein Zyklus V dauert beispielsweise 15 min. Der Zyklus V teilt sich in eine Brennzeit W und eine Schachtumsteuerung X. Die Brennzeit W unterteilt sich weiter in eine Brennstoffdosierzeit Y, in der der Brennstoff in den Brennschacht eingebracht wird und eine Ausbrennzeit Z, in der kein weiterer Brennstoff in den Brennschacht eingebracht wird, aber weiterhin ein sauerstoffhaltiges Gas zugeführt wird, sodass der noch im Brennschacht enthaltene Brennstoff ausbrennen kann.

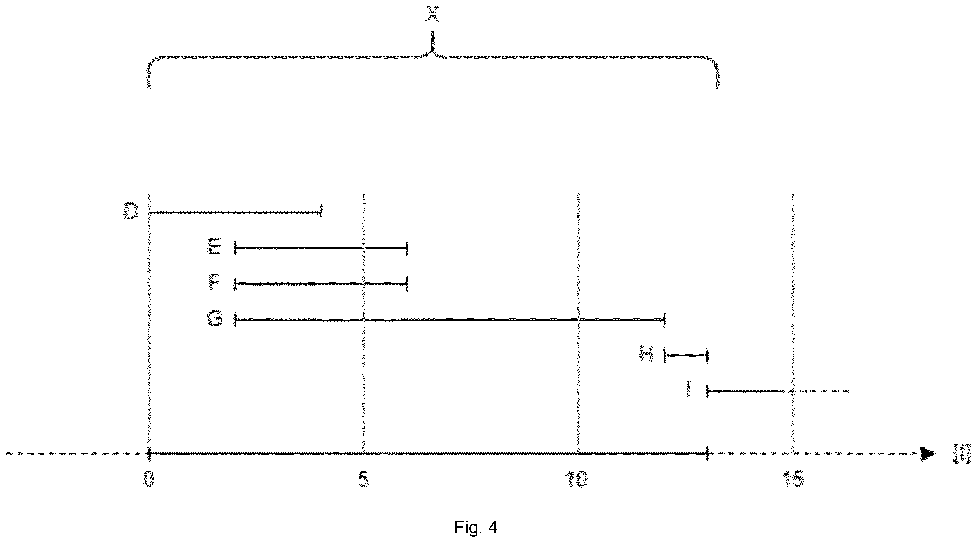

Fig. 4 betrachtet nun die Schritte, die während der in Fig. 3 gezeigten Schachtumsteuerung X erfolgen. Hierbei soll das erfindungsgemäße Verfahren an einem konkreten Beispiel demonstriert werden. Die Schachtumsteuerung X beginnt mit dem Schließen des zweiten Abgasauslasses D. welches sich im gezeigten Beispiel über 4 s hinzieht. Nach 2 s beginnen gleichzeitig das Öffnen des zweiten Verbrennungsgaseinlasses E, das Schließen des ersten Verbrennungsgaseinlasses F und das Öffnen des ersten Abgasauslasses G. Das Öffnen des zweiten Verbrennungsgaseinlasses E und das Schließen des ersten Verbrennungsgaseinlasses F dauern beide gleich lang und ebenso wie das Schließen des zweiten Abgasauslasses D 4 s. Das Öffnen des ersten Abgasauslasses G erfolgt langsamer und dauert im gezeigten Beispiel 10 s. Im Anschluss daran wird Die Oxidationsmittelzufuhr begonnen H. Mit dem Beginn der Brennstoffzufuhr I beginnt der nächste Zyklus V.

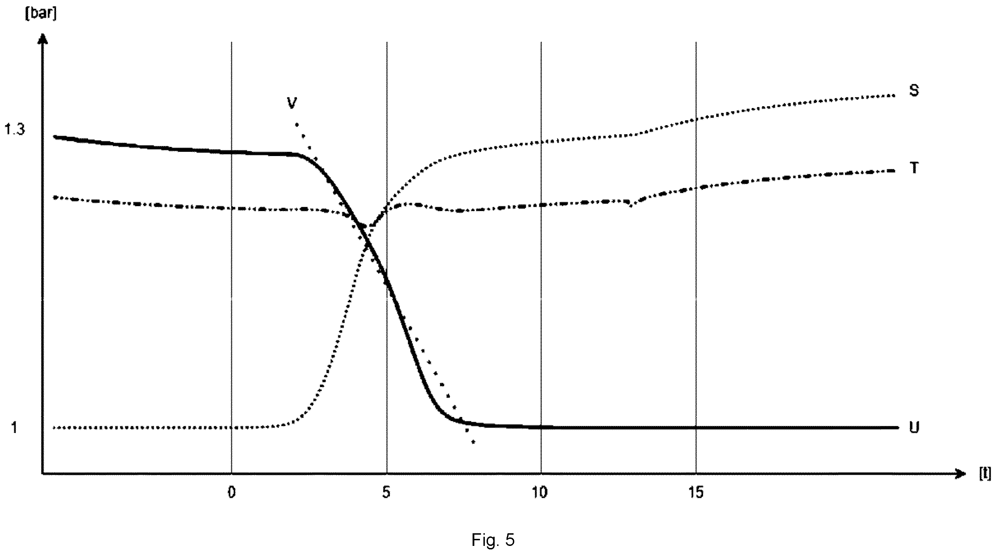

In Fig. 5 ist der Druckverlauf am oberen Ende des ersten Schachtes U, der Druckverlauf am oberen Ende des zweiten Schachtes S und der Druckverlauf im Verbindungskanal T in Verlauf der Schachtumsteuerung gezeigt. Zunächst ist der Druck im ersten Schacht, der als Brennschacht betrieben wird höher, beispielsweise bei 1,3 bar. Der Druck im zweiten Schacht, der als Regenerativschacht betrieben wird, ist geringer und liegt bei ungefähr 1 bar. Dazwischen liegt der Druck im Verbindungskanal T, welcher ungefähr bei 1,25 bar liegt. Durch das erfindungsgemäße Verfahren wird erreicht, dass der Druck im ersten Schacht mit einer Rate v fällt während gleichzeitig der Druck im zweiten Schacht mit der Rate v steigt. Grafisch erkennbar ist, dass hier nicht eine mathematisch identische Rate v gemeint ist, sondern dass die Rate v im technisch sinnvollen und regelbarem Maße gleich sind. Auch die Konstanz ist nicht im rein mathematischen Sinne gegeben, sondern im Umfang des technisch sinnvollen. Gut zu erkennen ist, dass dieses nur in erster Näherung im Rahmen der technisch üblichen Druckschwankungen erfolgt und nicht streng mathematisch zu verstehen ist. Aber bis auf einen sehr kleinen Einbruch bei Druck im Verbindungskanal T zum Zeitpunkt des Überkreuzens des Drucks im ersten Schacht U und des Drucks im zweiten Schacht S bleibt der Druck im Verbindungskanal T konstant, sodass eine Vermischung mit der Kühlluft weitestgehend vermeiden werden kann. Am Ende weist der nun als Brennschacht betriebene zweite Schacht den höheren Druck von etwa 1,3 bar und der nun als Regenerativschacht betriebene Schacht den geringeren Druck von etwa 1 bar auf.

### Bezugszeichen

- 1: GGR-Schachtofen
- 2: Schacht
- 3: Materialeinlass / Schleuse
- 4: Verbrennungsgasleitung
- 6: Abgasauslass
- 7: Kühlluftleitung
- 8: Heizeinrichtung
- 9: Brennstoffleitung
- 10: Brennerlanzen
- 11: Kühlgasabzugsleitung
- 12: Verbrennungsgaseinlass
- 14: Oxidationsmittelleitung
- 15: Gaseinlass
- 16: Filter
- 17: materialfreier Raum / Kühlgasabzugseinrichtung
- 18: Ringkanal / materialfreier Raum
- 19: Verbindungskanal
- 20: Brennzone
- 21: Vorwärmzone
- 22: Kühlzone
- 23: Kühlgaseinlass
- 25: Auslasstrichter
- 26: Innenzylinder
- 27: Kühllufteinlass
- 28: Kühlluftauslass
- 29: Kühlgasauslass
- 30: Kühlgaseinlass
- 31: Abgasfilter
- 32: Kühleinrichtung
- 33 - 38: Verdichter
- 39: Abgasleitung
- 40: Materialauslass / Schleuse
- 41: Austragseinrichtung
- 42a,b: Verbindungskanäle
- 43: Wärmetauscher / Rekuperator
- 45, 46: Gasanalyseeinrichtung

## Patentansprüche

1. Verfahren zur Schachtumsteuerung eines Gleichstrom-Gegenstrom-Regenerativ-Schachtofens (1), bei dem der Schachtofen während der Schachtumsteuerung nicht drucklos gemacht wird, wobei der Gleichstrom-Gegenstrom-Regenerativ-Schachtofen (1) einen ersten Schacht (2) und einen zweiten Schacht (2) aufweist, wobei der erste Schacht (2) eine erste Vorwärmzone (21) zum Vorwärmen des Materials, eine erste Brennzone (20) zum Brennen des Materials und eine erste Kühlzone (22) zum Kühlen des Materials aufweist, wobei der zweite Schacht (2) eine zweite Vorwärmzone (21) zum Vorwärmen des Materials, eine zweite Brennzone (20) zum Brennen des Materials und eine zweite Kühlzone (22) zum Kühlen des Materials aufweist, wobei die erste Brennzone (20) und die zweite Brennzone (20) über einen Verbindungskanal (19) verbunden sind, wobei die erste Vorwärmzone (21) einen ersten Verbrennungsgaseinlass (12) und die zweite Vorwärmzone (21) einen zweiten Verbrennungsgaseinlass (12) aufweist, wobei die erste Vorwärmzone (21) einen ersten Abgasauslass (6) und die zweite Vorwärmzone (21) einen zweiten Abgasauslass (6) aufweist, wobei die erste Brennzone (20) wenigstens eine erste Brennlanze und die zweite Brennzone (20) wenigstens eine zweite Brennlanze aufweist, wobei die wenigstens eine erste Brennlanze mit einer ersten Brennstoffzuführung und die wenigstens eine zweite Brennlanze mit einer zweiten Brennstoffzuführung verbunden ist, wobei das Verfahren die folgenden Schritte aufweist:
a) Betreiben des ersten Schachts (2) als Brennschacht und des zweiten Schachts (2) als Regenerativschacht,
b) Beenden der Brennstoffzufuhr durch die erste Brennstoffzuführung und damit Durchführen des Ausbrennens im ersten Schacht (2),
c) Schließen des zweiten Abgasauslasses (6),
nach dem Beginn des Schrittes c) und vor dem Ende des Schrittes c) Beginnen mit den folgenden Schritten d) bis f)
d) Öffnen des zweiten Verbrennungsgaseinlasses (12),
e) Schließen des ersten Verbrennungsgaseinlasses (12),
f) Öffnen des ersten Abgasauslasses (6),
g) Beginn der Brennstoffzufuhr durch die zweite Brennstoffzuführung und damit Betreiben des zweiten Schachts (2) als Brennschacht und des ersten Schachts (2) als Regenerativschacht,
wobei die Schritte d) und e) synchron erfolgen, wobei der Schritt f) nach dem Beginn und vor dem Ende der Schritte c), d) und e) beginnt.

2. Verfahren nach Anspruch 1, **dadurch gekennzeichnet, dass** die Schritte d) bis f) gleichzeitig beginnen.

3. Verfahren nach einem der vorstehenden Ansprüche, **dadurch gekennzeichnet, dass** die Schritte c), d) und e) eine erste Zeitdauer t₁ aufweisen, wobei der Schritt f) eine zweite Zeitdauer t₂ aufweist, wobei die zweite Zeitdauer t₂ größer ist als die erste Zeitdauer t₁.

4. Verfahren nach Anspruch 3, **dadurch gekennzeichnet, dass** die zweite Zeitdauer t₂ 1,5 bis 5 mal so groß ist wie die erste Zeitdauer t₁ ist.

5. Verfahren nach einem der vorstehenden Ansprüche, **dadurch gekennzeichnet, dass** der Schritt c) eine erste Zeitdauer t₁ aufweist, wobei die Schritte d), e) und f) 1/4 t₁ bis 3/4 t₁ nach dem Beginn des Schrittes c) beginnen.

6. Verfahren nach einem der vorstehenden Ansprüche, **dadurch gekennzeichnet, dass** die Zufuhr von Kühlgas und die Abfuhr von Kühlgas in der erste Kühlzone (22) und in der zweiten Kühlzone (22) kontinuierlich mit konstantem Kühlgasstrom fortgesetzt wird.

7. Verfahren nach einem der vorstehenden Ansprüche, **dadurch gekennzeichnet, dass** das Öffnen und Schließen in den Schritten c), d), e) und f) mit variabler Geschwindigkeit erfolgt.

8. Verfahren nach einem der vorstehenden Ansprüche, **dadurch gekennzeichnet, dass** im oberen Gasbereich des ersten Schachtes (2) ein erster Druck gemessen wird und dass im oberen Gasbereich des zweiten Schachtes (2) ein zweiter Druck gemessen wird.

9. Verfahren nach Anspruch 6 in Kombination mit Anspruch 7, **dadurch gekennzeichnet, dass** die Geschwindigkeit des Öffnens und Schließens in Schließen in den Schritten c), d), e) und f) derart geregelt wird, dass der erste Druck mit einer konstanten ersten Rate sinkt und/oder der zweite Druck mit einer konstanten zweiten Rate steigt.

10. Verfahren nach Anspruch 9, **dadurch gekennzeichnet, dass** die erste Rate betragsmäßig gleich der zweiten Rate ist, wobei die erste Rate und die zweite Rate ein entgegengesetztes Vorzeichen aufweisen.

11. Verfahren nach einem der vorstehenden Ansprüche, **dadurch gekennzeichnet, dass** der erste Verbrennungsgaseinlass (12) und der zweite Verbrennungsgaseinlass (12) mit einer Verbrennungsgasleitung (4) verbunden sind, wobei die Verbrennungsgasleitung (4) mit einer Oxidationsmittelzufuhr verbunden ist, wobei nach Abschluss der Schritte c), d), e) und f) und vor Beginn des Schrittes g) die Oxidationsmittelzufuhr geöffnet wird.

12. Verfahren nach Anspruch 11, **dadurch gekennzeichnet, dass** während Schritt b) die Oxidationsmittelzufuhr geschlossen wird.

13. Verfahren nach Anspruch 12, **dadurch gekennzeichnet, dass** das Schließen der Oxidationsmittelzufuhr zum Zeitpunkt des Endes des Schrittes b) abgeschlossen ist.

14. Verfahren nach einem der vorstehenden Ansprüche, **dadurch gekennzeichnet, dass** die Öffnungsgeschwindigkeit in den Schritten d) und f) steigend gewählt wird.

15. Verfahren nach einem der vorstehenden Ansprüche, **dadurch gekennzeichnet, dass** die Zuführung von Edukt und die Entnahme von Produkt während des Schrittes a) erfolgt.

16. Verfahren nach einem der vorstehenden Ansprüche, **dadurch gekennzeichnet, dass** die Öffnungsposition des ersten Verbrennungsgaseinlasses (12), des zweiten Verbrennungsgaseinlasses (12), des ersten Abgasauslasses (6) und des zweiten Abgasauslasses (6) erfasst wird.

## Claims

1. A method for shaft switchover in a parallel flow regenerative shaft kiln (1), in which the shaft kiln is not depressurized during shaft switchover, wherein the parallel flow regenerative shaft kiln (1) has a first shaft (2) and a second shaft (2), wherein the first shaft (2) has a first preheating zone (21) for preheating the material, a first burning zone (20) for burning the material and a first cooling zone (22) for cooling the material, wherein the second shaft (2) has a second preheating zone (21) for preheating the material, a second burning zone (20) for burning the material and a second cooling zone (22) for cooling the material, wherein the first burning zone (20) and the second burning zone (20) are connected via a connecting channel (19), wherein the first preheating zone (21) has a first combustion gas inlet (12) and the second preheating zone (21) has a second combustion gas inlet (12), wherein the first preheating zone (21) has a first exhaust gas outlet (6) and the second preheating zone (21) has a second exhaust gas outlet (6), wherein the first burning zone (20) has at least one first burning lance and the second burning zone (20) has at least one second burning lance, wherein the at least one first burning lance is connected to a first fuel feed and the at least one second burning lance is connected to a second fuel feed, the method comprising the following steps:
a) operating the first shaft (2) as a burning shaft and the second shaft (2) as a regenerative shaft,
b) stopping the fuel supply through the first fuel feed and thus carrying out burnout in the first shaft (2),
c) closing the second exhaust gas outlet (6),
after the start of step c) and before the end of step c), starting the following steps d) to f)
d) opening the second combustion gas inlet (12),
e) closing the first combustion gas inlet (12),
f) opening the first exhaust gas outlet (6),
g) starting the fuel supply through the second fuel feed and thus operating the second shaft (2) as a burning shaft and the first shaft (2) as a regenerative shaft,
wherein steps d) and e) are carried out synchronously, wherein step f) starts after the start and before the end of steps c), d) and e).

2. The method as claimed in claim 1, **characterized in that** steps d) to f) start at the same time.

3. The method as claimed in any of the preceding claims, **characterized in that** steps c), d) and e) have a first length of time t₁, and step f) has a second time length of time t₂, the second length of time t₂ being longer than the first length of time t₁.

4. The method as claimed in claim 3, **characterized in that** the second length of time t₂ is 1.5 to 5 times as long as the first length of time t₁.

5. The method as claimed in any of the preceding claims, **characterized in that** step c) has a first length of time t₁, and steps d), e) and f) start 1/4 t₁ to 3/4 t₁ after the start of step c).

6. The method as claimed in any of the preceding claims, **characterized in that** the supply of cooling gas and the discharge of cooling gas in the first cooling zone (22) and in the second cooling zone (22) is continued continuously at a constant flow of cooling gas.

7. The method as claimed in any of the preceding claims, **characterized in that** the opening and closing in steps c), d), e) and f) is carried out at variable speed.

8. The method as claimed in any of the preceding claims, **characterized in that** a first pressure is measured in the upper gas region of the first shaft (2) and **in that** a second pressure is measured in the upper gas region of the second shaft (2).

9. The method as claimed in claim 6 in combination with claim 7, **characterized in that** the speed of opening and closing in closing in steps c), d), e) and f) is controlled such that the first pressure falls at a constant first rate and/or the second pressure rises at a constant second rate.

10. The method as claimed in claim 9, **characterized in that** the first rate is identical in terms of absolute value to the second rate, the first rate and the second rate having opposite signs.

11. The method as claimed in any of the preceding claims, **characterized in that** the first combustion gas inlet (12) and the second combustion gas inlet (12) are connected to a combustion gas line (4), the combustion gas line (4) being connected to an oxidizing agent supply, the oxidizing agent supply being opened after completion of steps c), d), e) and f) and before the start of step g).

12. The method as claimed in claim 11, **characterized in that** the oxidizing agent supply is closed during step b).

13. The method as claimed in claim 12, **characterized in that** the closing of the oxidizing agent supply has been completed when step b) is ended.

14. The method as claimed in any of the preceding claims, **characterized in that** a rising opening speed is selected for the opening speed in steps d) and f).

15. The method as claimed in any of the preceding claims, **characterized in that** the feeding of reactant and the removal of product are carried out during step a).

16. The method as claimed in any of the preceding claims, **characterized in that** the opening position of the first combustion gas inlet (12), the second combustion gas inlet (12), the first exhaust gas outlet (6) and the second exhaust gas outlet (6) is detected.

## Revendications

1. Procédé de basculement de puits dans un four à chaux à puits régénératif à flux parallèle (1), dans lequel le four à puits n'est pas dépressurisé pendant le basculement de puits, dans lequel le four à chaux à puits régénératif à flux parallèle (1) possède un premier puits (2) et un second puits (2), dans lequel le premier puits (2) possède une première zone de préchauffage (21) pour le préchauffage du matériau, une première zone de combustion (20) pour la combustion du matériau et une première zone de refroidissement (22) pour le refroidissement du matériau, dans lequel le second puits (2) possède une seconde zone de préchauffage (21) pour le préchauffage du matériau, une seconde zone de combustion (20) pour la combustion du matériau et une seconde zone de refroidissement (22) pour le refroidissement du matériau, dans lequel la première zone de combustion (20) et la seconde zone de combustion (20) sont reliées via un canal de connexion (19), dans lequel la première zone de préchauffage (21) possède une première entrée de gaz de combustion (12) et la seconde zone de préchauffage (21) possède une seconde entrée de gaz de combustion (12), dans lequel la première zone de préchauffage (21) possède une première sortie de gaz d'échappement (6) et la seconde zone de préchauffage (21) possède une seconde sortie de gaz d'échappement (6), dans lequel la première zone de combustion (20) possède au moins une première lance de combustion et la seconde zone de combustion (20) possède au moins une seconde lance de combustion, dans lequel la au moins une première lance de combustion est reliée à une première alimentation en combustible et la au moins une seconde lance de combustion est reliée à une seconde alimentation en combustible, le procédé comprenant les étapes suivantes :
a) exploitation du premier puits (2) en tant que puits de combustion et du second puits (2) en tant que puits régénératif,
b) arrêt de l'alimentation en combustible à travers la première alimentation en combustible et ainsi réalisation de la combustion résiduelle dans le premier puits (2),
c) fermeture de la seconde sortie de gaz d'échappement (6),
après le début de l'étape c) et avant la fin de l'étape c), démarrage des étapes suivantes d) à f)
d) ouverture de la seconde entrée de gaz de combustion (12),
e) fermeture de la première entrée de gaz de combustion (12),
f) ouverture de la première sortie de gaz d'échappement (6),
g) démarrage de l'alimentation en combustible à travers la seconde alimentation en combustible et ainsi exploitation du second puits (2) en tant que puits de combustion et du premier puits (2) en tant que puits régénératif,
dans lequel les étapes d) et e) sont réalisées de manière synchrone, dans lequel l'étape f) commence après le début et avant la fin des étapes c), d) et e).

2. Procédé selon la revendication 1, **caractérisé en ce que** les étapes d) à f) commencent en même temps.

3. Procédé selon l'une quelconque des revendications précédentes, **caractérisé en ce que** les étapes c), d) et e) ont une première durée t1, et l'étape f) a une seconde durée t2, la seconde durée t2 étant plus longue que la première durée t1.

4. Procédé selon la revendication 3, **caractérisé en ce que** la seconde durée t2 est de 1,5 à 5 fois aussi longue que la première durée t1.

5. Procédé selon l'une quelconque des revendications précédentes, **caractérisé en ce que** l'étape c) a une première durée t1, et les étapes d), e) et f) commencent 1/4 t1 à 3/4 t1 après le début de l'étape c).

6. Procédé selon l'une quelconque des revendications précédentes, **caractérisé en ce que** l'alimentation en gaz de refroidissement et l'évacuation de gaz de refroidissement dans la première zone de refroidissement (22) et dans la seconde zone de refroidissement (22) sont poursuivies en continu à un débit constant de gaz de refroidissement.

7. Procédé selon l'une quelconque des revendications précédentes, **caractérisé en ce que** l'ouverture et la fermeture aux étapes c), d), e) et f) sont réalisées à vitesse variable.

8. Procédé selon l'une quelconque des revendications précédentes, **caractérisé en ce qu'**une première pression est mesurée dans la région supérieure de gaz du premier puits (2) et **en ce qu'**une seconde pression est mesurée dans la région supérieure de gaz du second puits (2).

9. Procédé selon la revendication 6 en combinaison avec la revendication 7, **caractérisé en ce que** la vitesse d'ouverture et de fermeture en fermeture aux étapes c), d), e) et f) est contrôlée de telle sorte que la première pression diminue à un premier taux constant et/ou que la seconde pression augmente à un second taux constant.

10. Procédé selon la revendication 9, **caractérisé en ce que** le premier taux est identique en valeur absolue au second taux, le premier taux et le second taux ayant des signes opposés.

11. Procédé selon l'une quelconque des revendications précédentes, **caractérisé en ce que** la première entrée de gaz de combustion (12) et la seconde entrée de gaz de combustion (12) sont reliées à une conduite de gaz de combustion (4), la conduite de gaz de combustion (4) étant reliée à une alimentation en agent oxydant, l'alimentation en agent oxydant étant ouverte après l'achèvement des étapes c), d), e) et f) et avant le début de l'étape g).

12. Procédé selon la revendication 11, **caractérisé en ce que** l'alimentation en agent oxydant est fermée pendant l'étape b).

13. Procédé selon la revendication 12, **caractérisé en ce que** la fermeture de l'alimentation en agent oxydant a été achevée lorsque l'étape b) est terminée.

14. Procédé selon l'une quelconque des revendications précédentes, **caractérisé en ce qu'**une vitesse d'ouverture croissante est sélectionnée pour la vitesse d'ouverture aux étapes d) et f).

15. Procédé selon l'une quelconque des revendications précédentes, **caractérisé en ce que** l'alimentation en réactif et l'évacuation de produit sont réalisées pendant l'étape a).

16. Procédé selon l'une quelconque des revendications précédentes, **caractérisé en ce que** la position d'ouverture de la première entrée de gaz de combustion (12), de la seconde entrée de gaz de combustion (12), de la première sortie de gaz d'échappement (6) et de la seconde sortie de gaz d'échappement (6) est détectée.
